# EUROPEAN PATENT APPLICATION

(11) **EP 4 215 485 A1**
(43) Date of publication of application: **26.07.2023**
(21) Application number: 21882893.7
(22) Date of filing: 21.10.2021
(51) Int. Cl.: C01B 39/20, C01B 39/36, C01B 39/44, C01B 39/46, B01D 53/04, B01D 53/92, B01D 53/94, F01N 3/08, F01N 3/10, F01N 3/28, B01J 29/08, B01J 29/40, B01J 29/65, B01J 29/70, B01J 29/76, B01J 20/18, B01J 20/28

(54) **HYDROCARBON ADSORPTION DEVICE**

(30) Priority: 23.10.2020 JP 2020178212
(71) Applicant: CATALER CORPORATION, Kakegawa-shi, Shizuoka 437-1492 (JP)
(72) Inventor: OGAWA, Ryoichi, Kakegawa-shi, Shizuoka 437-1492 (JP); CHIBA, AKIYA, Kakegawa-shi, Shizuoka 437-1492 (JP); IMAI, Hiroto, Kakegawa-shi, Shizuoka 437-1492 (JP)
(74) Representative: Kramer Barske Schmidtchen Patentanwälte PartG mbB
(86) International application number: PCT/JP2021/038891
(87) International publication number: WO 2022/085753

(57) **Abstract**

The present invention provides a hydrocarbon adsorption device 10 configured to circulate a fluid and adsorb hydrocarbons in the fluid. The hydrocarbon adsorption device 10 includes a first hydrocarbon adsorption section 20 containing zeolite, and a second hydrocarbon adsorption section 30 which is provided downstream of the first hydrocarbon adsorption section 20 in the flowing direction of the fluid. The pore diameter P1 of the zeolite contained in the first hydrocarbon adsorption section 20 is smaller than the pore diameter P2 of the zeolite contained in the second hydrocarbon adsorption section 30 (i.e., P1 < P2).

## Description

### Technical Field

The present relates to a hydrocarbon adsorption device. The present invention particularly relates to a hydrocarbon adsorption device configured to adsorb hydrocarbons in exhaust gas.

The present application is based upon and claims the benefit of priority from Japanese patent application No. 2020-178212 filed on October 23, 2020, and the entire disclosure of which is incorporated herein in its entirety by reference.

### Background Art

Exhaust gas exhaused from internal combustion engines of vehicles and the like contains hydrocarbons (HCs), such as chain saturated hydrocarbons (paraffinic hydrocarbons) such as methane, ethane, and propane, chain unsaturated hydrocarbons (olefinic hydrocarbons) such as ethylene, propylene, and butene, and cyclic hydrocarbons (aromatic hydrocarbons) such as benzene, toluene, and xylene. In order to remove these various HCs from exhaust gas, the method of contacting exhaust gas with catalytic metals (e.g., oxidation catalysts and three-way catalysts) has been widely used (see, for example, Patent Literatures 1 to 6).

However, when the internal combustion engines are in a cold state, such as when actuating internal combustion engines, for example, HCs cannot be sufficiently purified if the temperature of the exhaust gas is low and the catalyst metals have not reached the temperature at which they become active. In addition, the concentration of HCs in the exhaust gas is higher than in normal operation because air-fuel mixture with a higher fuel concentration is supplied to the internal combustion engines. Thus, for example, Patent Literature 1 discloses an exhaust gas purification catalyst, including a base material, an HC adsorption layer formed on the surface of the base material and containing an HC adsorption material, and a catalyst layer formed on the surface of the HC adsorption layer and containing a catalyst metal. In the exhaust gas purification catalyst of Patent Literature 1, HCs in the exhaust gas are once adsorbed on the HC adsorption layer while the internal combustion engines are in a cold state. HCs adsorbed on the HC adsorption layer are desorbed from the HC adsorption layer when the exhaust gas reaches or exceeds a predetermined temperature (desorption temperature) and are decomposed and removed by the catalytic metals.

### Citation List

### Patent Literatures

Patent Literature 1: Japanese Patent Application Publication No. 2002-210371
Patent Literature 2: Japanese Patent Application Publication No. 2005-007260
Patent Literature 3: WO 2005/092482
Patent Literature 4: Japanese Patent Application Publication No. 2004-089881
Patent Literature 5: Japanese Patent Application Publication No. 2013-119845
Patent Literature 6: Japanese Patent Application Publication No. 2015-173993

### Summary of Invention

However, as mentioned above, there are various types of HCs exhausted from internal combustion engines. Further, according to the study conducted by the present inventors, when competitive adsorption of various HC species occurs in the HC adsorption layer, HC species with strong adsorption (e.g., HC species with small molecular size and unsaturated bonds) are preferentially adsorbed and HC species with weak adsorption (e.g., HC species with large molecular size and no unsaturated bonds) are relatively less adsorbed. Therefore, in commonly used exhaust gas purification catalysts, certain HC species are mainly adsorbed in the HC adsorption layer, and HC species that cannot be adsorbed are discharged as they are, leading to emission deterioration. In response to emission regulations, which are becoming stricter year by year, further reduction of emissions of HC species is required.

The present invention was made in view of the above circumstances, and is intended to provide a novel hydrocarbon adsorption device capable of efficiently adsorbing hydrocarbons.

The present invention provides a hydrocarbon adsorption device configured to circulate a fluid and adsorb hydrocarbons in the fluid. The hydrocarbon adsorption device includes a first hydrocarbon adsorption section containing zeolite, and a second hydrocarbon adsorption section downstream of the first hydrocarbon adsorption section in a fluid flowing direction in which the fluid flows and containing zeolite. The pore diameter P1 of the zeolite contained in the first hydrocarbon adsorption section is smaller than the pore diameter P2 of the zeolite contained in the second hydrocarbon adsorption section.

With such a configuration, the fluid comes into contact with the first hydrocarbon adsorption section before it comes into contact with the second hydrocarbon adsorption section. The first hydrocarbon adsorption section contains zeolite with a smaller pore diameter than the second hydrocarbon adsorption section. Among various types of HC species contained in the fluid, HC species with small molecular size are adsorbed on the first hydrocarbon adsorption section. The second hydrocarbon adsorption section is arranged downstream of the first hydrocarbon adsorption section. The second hydrocarbon adsorption section contains zeolite with a larger pore diameter than the first hydrocarbon adsorption section. HC species with larger molecular size are adsorbed on the second hydrocarbon adsorption section. Thus, by using the pores specific to the zeolite to adsorb HC species in separate hydrocarbon adsorption sections for each molecular size of HC species, the competitive adsorption of the HC species can be reduced, and Hcs can be efficiently adsorbed. As a result, HCs can be suitably removed from the fluid.

The term "pore diameter" used herein is the largest pore diameter (Å) among the pore diameters shown for each frame type in the International Zeolite Association's database "Atlas of Zeolite Framework Types (https://www. sciencedirect.com/book/9780444530646/atlas-of-zeolite-framework-types?via=ihub=)." In other words, the pore diameter is a long diameter. In the case of two sets of channels, the pore diameter is the largest long diameter among them. When two types or more of zeolite are included, the pore diameter is the weighted average of the largest pore diameter (long diameter) of each framework type on a mass basis. In this database, the radius r(O²⁻) of oxygen ions is assumed to be 1.35 Å.

In a preferred aspect of the hydrocarbon adsorption device disclosed herein, the difference (P2 - P1) between P1 and P2 is between 0.1 Å and 4 Å. This allows for better reduction of competitive adsorption of HC species and a higher level of effectiveness of the technology disclosed herein.

In a preferred aspect of the secondary battery disclosed herein, the pore diameter P1 is between 3.5 Å and 5.5 Å. This can facilitate the adsorption of olefinic hydrocarbons with smaller molecular size (e.g., small carbon number, as an example, lower than 4 carbon atoms).

In a preferred aspect of the secondary battery disclosed herein, the pore diameter P2 is between 5 Å and 8 Å. This can facilitate the adsorption of aromatic hydrocarbons with larger molecular size (e.g., large carbon number or bulky structure), such as m-, o-xylene, for example.

In a preferred aspect of the hydrocarbon adsorption device disclosed herein, the silica-alumina ratio of zeolite contained in the first hydrocarbon adsorption section is smaller than the silica-alumina ratio of zeolite contained in the second hydrocarbon adsorption section. According to the present inventors, many of the HCs with small molecular size (e.g., a low carbon number of 4 or less) have unsaturated bonds and strong adsorption. A smaller silica-alumina ratio of the zeolite contained in the first hydrocarbon adsorption section facilitates adsorption of HCs with strong adsorption.

In a preferred aspect of the hydrocarbon adsorption device disclosed herein, the silica-alumina ratio of the zeolite contained in the first hydrocarbon adsorption section is between 10 and 30. This allows suitable adsorption of lower HCs. This can improve durability of the first hydrocarbon adsorption section.

In a preferred aspect of the hydrocarbon adsorption device disclosed herein, the zeolite contained in the first hydrocarbon adsorption section includes at least one framework type of CHA or FER. This allows for a higher desorption temperature for HCs, and allows the HCs to be suitably retained until the fluid is sufficiently warmed up.

In a preferred aspect of the hydrocarbon adsorption device disclosed herein, the zeolite contained in the second hydrocarbon adsorption section includes at least one framework type of MFI or FAU. This allows for a higher desorption temperature for HCs, and allows the HCs to be suitably retained until the fluid is sufficiently warmed up.

In a preferred aspect of the hydrocarbon adsorption device disclosed herein, the fluid is gas (e.g., exhaust gas). This allows for suitable adsorption of HCs contained in gas (e.g., in exhaust gas), thereby reducing emissions of HCs.

The prevent invention further provides an exhaust gas purification system arranged in an exhaust path of an internal combustion engine and configured to purify hydrocarbons in exhaust gas exhausted from the internal combustion engine. Such an exhaust gas purification system includes the hydrocarbon adsorption device, a catalyst metal portion containing a catalyst metal.

With such a configuration, for example, HCs can be suitably adsorbed when the internal combustion engine is in a cold state. In addition, the desorption temperatures of HCs can be increased so that HCs can be suitably desorbed after the internal combustion engine has been sufficiently warmed up. This reduces emissions of HCs.

### Brief Description of Drawings

[Fig. 1] Fig. 1 is a schematic view of an exhaust gas purification system according to an embodiment.
[Fig. 2] Fig. 2 is a schematic sectional view of a portion of a partition between a first hydrocarbon adsorption section and a second hydrocarbon adsorption section.
[Fig. 3] Fig. 3 illustrates a temperature increase pattern during an adsorption/desorption evaluation of HCs.
[Fig. 4] Fig. 4 is a graph illustrating a relationship between desorbed THC and temperature in Test Example 1.
[Fig. 5] Fig. 5 is a graph illustrating a relationship of a difference between THC desorption peak temperature and pore diameter in Test Example 1.
[Fig. 6] Fig. 6 is a graph illustrating a relationship between desorbed THC and temperature in Test Example 2.
[Fig. 7] Fig. 7 is a graph illustrating a relationship of a difference between THC desorption peak temperature and pore diameter in Test Example 2.
[Fig. 8] Fig. 8 is a schematic sectional view illustrating a portion of a partition of a hydrocarbon adsorption device according to another embodiment.
[Fig. 9] Fig. 9 is a schematic sectional view illustrating a portion of a partition of a hydrocarbon adsorption device according to yet another embodiment.
[Fig. 10] Fig. 10 is a schematic sectional view of a portion of a partition of an exhaust gas purification catalyst body with hydrocarbon adsorption sections used in Test Example 3.
[Fig. 11] Fig. 11 is a graph illustrating performance evaluation test results of two types (Example 11 and Comparative Example 11) of the exhaust gas purification catalyst body with hydrocarbon adsorption sections used in Test Example 3.

### Description of Embodiments

Some preferred embodiments of the present invention will be described below with reference to the accompanying drawings. The matters necessary for executing the present invention, except for matters specifically herein referred to can be grasped as design matters of those skilled in the art based on the related art in the preset field. The disclosure can be executed based on the contents disclosed herein and the technical knowledge in the present field. In the following drawings, the same members/portions which exhibit the same action are denoted by the same reference numerals, and the duplicated descriptions may be omitted or simplified. The dimensional relation (such as length, width, or thickness) in each drawing does not reflect the actual dimensional relation. The expression "A to B" (A and B are any numerical values) indicating herein a range means A or more to B or less, and also encompasses the meaning of "preferably more than A" and "preferably less than B."

### «Exhaust Gas Purification System»

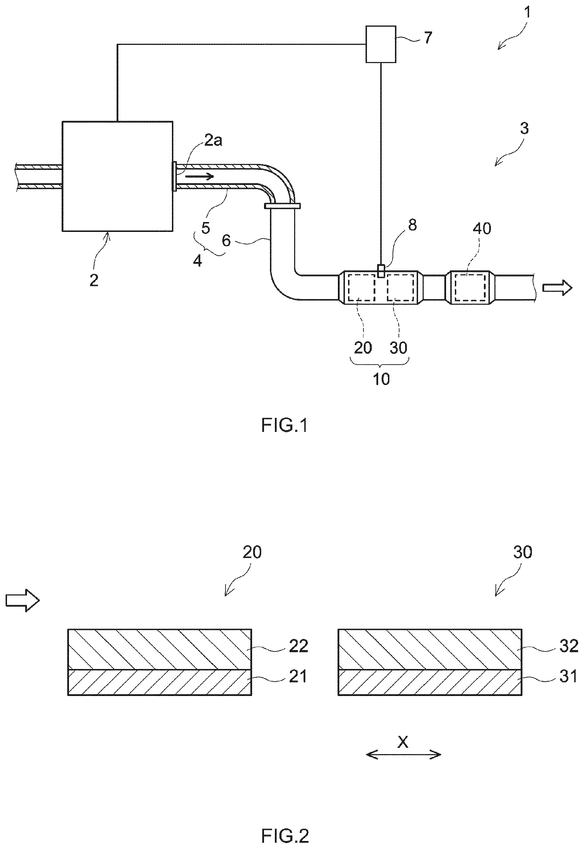

Fig. 1 is a schematic view of an exhaust gas purification system 1. The exhaust gas purification system 1 includes an internal combustion engine (engine) 2, an exhaust gas purification device 3, and an engine control unit (ECU) 7. The exhaust gas purification system 1 is configured to purity, in the exhaust gas purification device 3, HCs contained in exhaust gas exhausted from the internal combustion engine 2. The arrow in Fig. 1 represents an exhaust gas flowing direction. Further, in the following description, along the flow of the exhaust gas, the side near the internal combustion engine 2 is referred to as an upstream side, and the side farther from the internal combustion engine 2 is referred to as a downstream side.

The internal combustion engine 2 mainly includes a gasoline engine of a gasoline-powered vehicle. The internal combustion engine 2 may be an engine other than a gasoline engine, such as a diesel engine or an engine in a hybrid vehicle. The internal combustion engine 2 includes a combustion chamber (not shown). The combustion chamber is in connection to a fuel tank (not shown). The fuel tank stores gasoline in this case. However, the fuel stored in the fuel tank may be diesel fuel (light oil), and the like. In the combustion chamber, fuel supplied from the fuel tank is mixed with oxygen, and the mixture is then burned. This converts combustion energy into mechanical energy. The combustion chamber is in communication with an exhaust port 2a. The exhaust port 2a is in communication with the exhaust gas purification device 3. The combusted fuel gas is exhausted into the exhaust gas purification device 3 as exhaust gas. "Exhaust gas" is an example of a fluid, or more specifically, a gas. Exhaust gas contains a variety of HC species having different molecular sizes. For example, the exhaust gas may contain HC species with a relatively small size of about 3.5 Å to about 5.5 Å in diameter and HC species with a large size of about 5.5 Å to about 8 Å in diameter.

The exhaust gas purification device 3 includes an exhaust path 4 in communication with the internal combustion engine 2, an oxygen sensor 8, a hydrocarbon adsorption device 10, and a catalyst metal portion 40. The exhaust path 4 is an exhaust gas path through which exhaust gas flows. The exhaust path 4 includes an exhaust manifold 5 and an exhaust pipe 6. An upstream end of the exhaust manifold 5 is in connection to the exhaust port 2a of the internal combustion engine 2. The downstream other end of the exhaust manifold 5 is in connection to the exhaust pipe 6. In the middle of the exhaust pipe 6, the hydrocarbon adsorption device 10 and the catalyst metal portion 40 are arranged in order from the upstream side. Note that the arrangement of the hydrocarbon adsorption device 10 and the catalyst metal portion 40 may be changed, as appropriate. The number of the hydrocarbon adsorption devices 10 and the number of the catalyst metal portions 40 are not particularly limited, and may be multiple.

The hydrocarbon adsorption device 10 is configured to adsorb HCs in exhaust gas when the internal combustion engine 2 is in a cold state, for example, at about less than 170°C and to desorb HCs when the temperature of the exhaust gas reaches a predetermined temperature (e.g., about 170°C). The hydrocarbon adsorption device 10 includes a first hydrocarbon adsorption section 20 and a second hydrocarbon adsorption section 30. The first hydrocarbon adsorption section 20 and the second hydrocarbon adsorption section 30 herein are arranged in tandem. The configurations of the first hydrocarbon adsorption section 20 and the second hydrocarbon adsorption section 30 will be described in detail later. The oxygen sensor 8 is arranged between the first hydrocarbon adsorption section 20 and the second hydrocarbon adsorption section 30 in the exhaust gas flowing direction. At the timing when HCs are desorbed, the exhaust gas is considered to be weakly rich atmosphere due to the temperature increase. The oxygen sensor 8 arranged between the first hydrocarbon adsorption section 20 and the second hydrocarbon adsorption section 30 facilitates control of the exhaust gas atmosphere to the theoretical air-to-fuel ratio (stoichiometric). As a result, the purification rate for HCs can be improved more suitably.

The catalyst metal portion 40 is configured to degrade and remove HCs in the exhaust gas when the temperature of the exhaust gas reaches the predetermined temperature or higher. The catalyst metal portion 40 contains, as an essential component, a catalyst metal for degrading HCs in the exhaust gas. The catalyst metal is not particularly limited, and one or more of various metal species commonly used for this type of application and known to function as an oxidation catalyst or a three-way catalyst can be used. Specific examples of the catalyst metal include noble metals, i.e., platinum group metals, namely rhodium (Rh), palladium (Pd), platinum (Pt), ruthenium (Ru), osmium (Os), and iridium (Ir), or silver (Ag) or gold (Au). In place of or in addition to the noble metals, base metals such as alkali metals, alkaline earth metals, and transition metals may be used. For example, metal species such as iron (Fe), cobalt (Co), nickel (Ni), and copper (Cu) may also be used. Alloys of two or more kinds of these metals may also be used. HCs are oxidized by catalyst metals and converted (purified) to water, carbon dioxide, and the like.

The catalyst metal portion 40 may further contain an optional component. Examples of the optional component include inorganic oxides, OSC materials having an oxygen storage capacity (OSC), NOx adsorbents having a NOx storage capacity, and stabilizing agents. Examples of the inorganic oxides include Al-containing oxides such as alumina and alumina-containing oxides. Examples of the OSC materials include Ce-containing oxides such as ceria and ceria (CeOz)-zirconia (ZrOz) composite oxides (CZ composite oxides). Examples of the NOx absorbents include alkaline earth elements such as calcium (Ca), barium (Ba), and strontium (Sr). Examples of the stabilizing agent include rare-earth elements such as yttrium (Y), lanthanum (La), and neodymium (Nd).

On the upstream side of the hydrocarbon adsorption device 10, for example, three-way catalysts for purifying HCs, CO, and NOx contained in exhaust gas in parallel; gasoline particulate filters (GPFs) for removing particulate matters contained in the exhaust gas; diesel particulate filters for removing PM contained in the exhaust gas; diesel oxidation catalysts (DOCs) for purifying HC and CO contained in the exhaust gas; NOx storage-reduction (NSR) catalysts for adsorbing NOx during normal operation (under lean conditions) and purifying NOx when more fuel is injected (in a rich atmosphere); and the like may further be arranged. In particular, a three-way catalyst is preferably provided upstream of the hydrocarbon adsorption device 10. This reduces the amount of CO and/or NOx flowing into the hydrocarbon adsorption device 10 and increases the amount of HCs that can be adsorbed by the hydrocarbon adsorption device 10.

The ECU 7 is configured to control the internal combustion engine 2 and the exhaust gas purification device 3. The ECU 7 is electrically connected to a sensor (e.g., an oxygen sensor 8, and a temperature sensor and a pressure sensor (not shown)) installed in each of parts of the internal combustion engine 2 and the exhaust gas purification device 3. The configuration of the ECU 7 may be the same as conventional one and is not particularly limited. The ECU 7 may be, for example, a processor or an integrated circuit. The ECU 7 has an input port (not shown) and an output port (not shown). The ECU 7 receives information on the operating state of the vehicle and the amount, temperature, and pressure of the exhaust gas exhausted from the internal combustion engine 2, for example. The ECU 7 receives the information detected by the sensors (e.g., the amount of oxygen measured by the oxygen sensor 8) via the input port. The ECU 7 transmits a control signal via an output port based on the information received, for example. The ECU 7 controls operation such as fuel injection control and fuel ignition control of the internal combustion engine 2, and intake air volume control. The ECU 7 controls driving and stopping of the exhaust gas purification device 3 on the basis of the operating state of the internal combustion engine 2, the amount of exhaust gas exhausted from the internal combustion engine 2, and the like.

### «Hydrocarbon Adsorption Device»

The hydrocarbon adsorption device 10 includes a first hydrocarbon adsorption section 20 and a second hydrocarbon adsorption section 30 in order from the upstream side. The first hydrocarbon adsorption section 20 and the second hydrocarbon adsorption section 30 are separate and independent herein. The first hydrocarbon adsorption section 20 and the second hydrocarbon adsorption section 30 are integral with each other. The outside shapes of the first hydrocarbon adsorption section 20 and the second hydrocarbon adsorption section 30 herein are each cylindrical. The outside shape of the hydrocarbon adsorption device 10 is not particularly limited, and examples thereof include an elliptic cylindrical shape, a polygonal cylindrical shape, a pipe foam, a foam form, a pellet shape, a fiber form.

Fig. 2 is a partially enlarged sectional view of the first hydrocarbon adsorption section 20 and the second hydrocarbon adsorption section 30. The arrow in Fig. 2 represents an exhaust gas flowing direction. In Fig. 2, the upstream side of the exhaust path 4 relatively close to the internal combustion engine 2 is represented on the left, and the downstream side of the exhaust path 4 relatively far from the internal combustion engine 2 is represented on the right. The first hydrocarbon adsorption section 20 and the second hydrocarbon adsorption section 30 are installed in the exhaust path 4 such that the cylinder axis direction X is along the exhaust gas flowing direction. However, these directions are directions for the sake of explanation and do not limit the installation configuration of the first hydrocarbon adsorption section 20 and the second hydrocarbon adsorption section 30. The first hydrocarbon adsorption section 20 herein includes a base material 21 and a first hydrocarbon adsorption layer 22. The second hydrocarbon adsorption section 30 includes a base material 31 and a second hydrocarbon adsorption layer 32.

The base material 21, 31 is not particularly limited, and can adopt various materials and forms which have been used in this type of application. The base material 21, 31 may be a ceramics carrier made of ceramics such as silicon carbide (SiC), cordierite, and aluminum titanate, or a metal carrier made of stainless steel (SUS), a Fe-Cr-Al alloy, and a Ni-Cr-Al alloy. The base material 21, 31 may be an electrically heated catalyst converter (EHC: Electrically Heated Converter) or plasma-based catalyst converter.

The base material 21, 31 has a honeycomb structure having multiple cells (hollows) as exhaust gas flow paths regularly arranged in the cylinder axis direction X and partitions (ribs) partitioning the cells. The base material 21, 31 has a so-called straight flow structure where upstream and downstream ends of each cell are open. However, the base material 21, 31 may have any of various known structures such as a wall flow structure where one end of each cell is open and the other end of each cell is closed. Although not particularly limited thereto, the length (average length) of the base material 21, 31 along the cylinder axis direction X may be approximately 10 mm to 200 mm, for example, 20 mm to 100 mm. The apparent volume (bulk volume) including the volume of insides of the cells in addition to the volume of the base material 21, 31 (the volume (pure volume) of the base material itself) is approximately 0.1 L to 10 L, for example, 0.5 L to 5 L.

The first hydrocarbon adsorption layer 22 herein is provided on the base material 21, more specifically on the surface of the partition of the base material 21. The second hydrocarbon adsorption layer 32 herein is provided on the base material 31, more specifically on the surface of the partition of the base material 31. The first hydrocarbon adsorption layer 22 and the second hydrocarbon adsorption layer 32 are provided along the cylinder axis direction X. The first hydrocarbon adsorption layer 22 and the second hydrocarbon adsorption layer 32 may be continuous or intermittent.

The first hydrocarbon adsorption layer 22 and the second hydrocarbon adsorption layer 32 each contain zeolite as an essential component. Zeolite has micropores with a pore diameter of 20 Å or less, which is comparable to the size of the molecules of HCs. In the present embodiment, the pore diameter P1 of the zeolite contained in the first hydrocarbon adsorption layer 22 is smaller than the pore diameter P2 of the zeolite contained in the second hydrocarbon adsorption layer 32. That is, P1 < P2. The first hydrocarbon adsorption layer 22 is configured to selectively adsorb HC species with smaller molecular size due to the shape selectivity based on zeolite specific pores. The second hydrocarbon adsorption layer 32 is configured to selectively adsorb HC species with relatively larger molecular size than those adsorbed on the first hydrocarbon adsorption layer 22, due to the shape selectivity based on zeolite specific pores. Thus, by adsorbing HC species in separate hydrocarbon adsorption sections for each molecular size of HC species, the competitive adsorption of the HC species can be reduced, and HCs can be efficiently adsorbed.

As zeolite, one or more of various types of zeolite known to be used for this type of application can be used. Zeolite contained in the first hydrocarbon adsorption layer 22 and the second hydrocarbon adsorption layer 32 may be natural zeolite generated as natural mineral resources, or synthetic zeolite synthesized artificially. Zeolite contained in the first hydrocarbon adsorption layer 22 and the second hydrocarbon adsorption layer 32 can be selected, as appropriate, from framework types represented by 3-letter code of structure in the database of the International Zeolite Association.

Examples of the framework types include ACO, AEI, AEN, AFX, AFT, AFN, ANA, APC, APD, ATT, BEA, CDO, CHA, DDR, DFT, EAB, EDI, EPI, ERI, FER, FAU (β type), GIS, GOO, IHW, ITE, ITW, LEV, KFI, MER, MON, MOR, MFI (ZSM-5 type), NSI, OWE, PAU, PHI, RHO, RTH, SAT, SAV, SIV, THO, TSC, UEI, UFI, VNI, YUG, and ZON. Zeolite may be, for example, ion-exchange zeolite in which some or all of hydrogen is exchanged with copper or other ions. Theses types of zeolite is commercially available. As an example, zeolite of several framework types are shown in Table 1.

**[Table 1]**

| Frame work type | The numb er of ring memb ers | Channel | Short diameter (Å) × long diameter (Å) | Pore diameter (Å) | Framework structure |
|---|---|---|---|---|---|
| BEA | 12 | 100 | 6.6 × 6.7 | 6.7 | 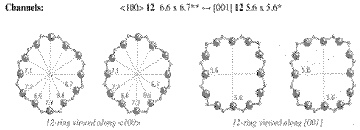 |
| | | 001 | 5.6 × 5.6 | | |
| CHA | 8 | 001 | 3.8 × 3.8 | 3.8 | 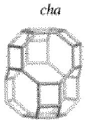 |
| FAU | 12 | 111 | 7.4 × 7.4 | 7.4 | 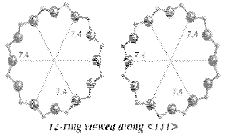 |
| FER | 10 | 001 | 4.2 × 5.4 | 5.4 | 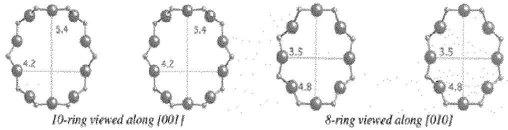 |
| | | 010 | 3.5 × 4.8 | | |
| MFI | 10 | 100 | 5.1 × 5.5 | 5.6 | 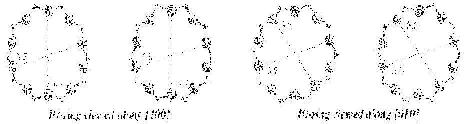 |
| | | 010 | 5.3 × 5.6 | | |

| | | | | | |
|---|---|---|---|---|---|
| Source: Atlas of Zeolite Framework Types (database of the International Zeolite Society) | | | | | |

Although not particularly limited thereto, in some preferred embodiments, the first hydrocarbon adsorption layer 22 contains zeolite of at least one framework type of CHA or FER. Among them, zeolite of H-CHA which has not been ion-exchanged is preferable. This allows better control of desorption of adsorbed HCs, and allows HCs to be suitably retained in the first hydrocarbon adsorption layer 22 until the exhaust gas is sufficiently warmed up (e.g., to 200°C or higher).

Although not particularly limited thereto, in some preferred embodiments, the second hydrocarbon adsorption layer 32 contains zeolite of at least one framework type of MFI or FAU. MFI has three-dimensional pores and excellent adsorption performance. FAU has excellent adsorption and retention performance for a wide range of HC species. Accordingly, the advantages of the technology disclosed herein can be exhibited at a higher level.

Although not particularly limited thereto, in some preferred embodiments, the pore diameter P1 of zeolite contained in the first hydrocarbon adsorption layer 22 is approximately 3 Å or higher, preferably 3.5 Å or higher, for example, 3.8 Å or higher, and approximately 7 Å or less, preferably 5.5 Å or less, for example, 5.4 Å or less. This can facilitate the adsorption of lower olefinic hydrocarbon with molecular size of equal to or lower than 4 carbon atoms (especially 3 carbon atoms), for example. This configuration is particularly preferable when the fuel is gasoline.

Although not particularly limited thereto, in some preferred embodiments, the pore diameter P2 of zeolite contained in the second hydrocarbon adsorption layer 32 is approximately 4 Å or higher, preferably 5 Å or higher, for example, 5.5 Å or higher, 5.6 Å or higher, and approximately 10 Å or less, preferably 8 Å or less, for example, 7.4 Å or less. This can facilitate the adsorption of aromatic hydrocarbons with larger molecular size, such as 5 to 10 carbon atoms or a bulky structure, such as m-, o-xylene, for example. The ratio (short diameter/long diameter) of the zeolite contained in the second hydrocarbon adsorption layer 32 is 0.98 or less, for example, 0.9 ≤ (short diameter/long diameter) ≤ 0.95. The long diameter and the short diameter are described in "Atlas of Zeolite Framework Types" mentioned above. This allows, for example, for better prevention of desorption in the cold state and improvement in retention performance, of even HC species with low adsorption.

Although not particularly limited thereto, in some preferred embodiments, the difference (P2 - P 1) between the pore diameter P1 of the zeolite contained in the first hydrocarbon adsorption layer 22 and the pore diameter P2 of the zeolite contained in the second hydrocarbon adsorption layer 32 is approximately 0.01 Å or higher, preferably 0.1 Å or higher, and approximately 5 Å or less, preferably 4 Å or less. This allows for better reduction of competitive adsorption of HC species, as well as adsorption of a wide range of HC species with a wide range of molecular sizes, for example, about 2 to 12 carbon atoms in size. Accordingly, the advantages of the technology disclosed herein can be exhibited at a higher level.

Although not particularly limited thereto, in some preferred embodiments, the first hydrocarbon adsorption layer 22 contains zeolite with the number of ring members of 8 and/or 10, particularly 8. In some preferred embodiments, the second hydrocarbon adsorption layer 32 contains zeolite with the number of ring members of 10 or 12. The number of ring members of zeolite contained in the second hydrocarbon adsorption layer 32 may be identical to or larger than the number of ring members of zeolite contained in the first hydrocarbon adsorption layer 22.

Although not particularly limited thereto, in some preferred embodiments, the zeolite contained in the first hydrocarbon adsorption layer 22 and the zeolite contained in the second hydrocarbon adsorption layer 32 each have a silica-alumina ratio of approximately 5 or higher, preferably 10 or higher, for example, 13 or higher, and approximately 3000 or less, preferably 2000 or less, for example, 1500 or less. HCs are easily adsorbed on Al out of Si and Al, which are main components of zeolite. Thus, the adsorption performance and retention performance of HCs in the hydrocarbon adsorption device 10 can be improved by setting the silica-alumina ratio to the predetermined value or less. Thus, the silica-alumina ratio of the predetermined value or higher allows the crystal structure to be stably maintained even when the hydrocarbon adsorption device 10 is exposed to high temperatures by exhaust gas, thereby exhibiting adsorption performance for HCs. The "silica-alumina ratio" herein refers to the molar ratio (SiO₂/Al₂O₃) of the silica component to the alumina component in zeolite.

Although not particularly limited thereto, in some preferred embodiments, the silica-alumina ratio of the zeolite contained in the first hydrocarbon adsorption layer 22 is smaller than that of the zeolite contained in the second hydrocarbon adsorption layer 32. According to the present inventors, many of the HCs with small molecular size (in other words, a low carbon number) have unsaturated bonds and strong adsorption. A smaller silica-alumina ratio of the zeolite contained in the first hydrocarbon adsorption layer 22 facilitates adsorption of lower HCs with strong adsorption.

For the reasons described above, the silica-alumina ratio of the zeolite contained in the first hydrocarbon adsorption layer 22 is suitably approximately 100 or less, preferably 30 or less, for example, 23 or less. The silica-alumina ratio of zeolite contained in the first hydrocarbon adsorption layer 22 is suitably approximately 5 or higher, preferably 10 or higher, for example, 13 or higher. This makes adsorption between the zeolite and HCs be too strong and makes it difficult to desorb HCs, thereby preventing gradual decrease in effective adsorption amount. As a result, excellent adsorption performance can be maintained for a long period of time. In some preferred embodiments, the silica-alumina ratio of the zeolite contained in the second hydrocarbon adsorption layer 32 is suitably approximately 50 or higher, preferably 100 or higher, 300 or higher, for example, 500 or higher, and approximately 3000 or less, 2000 or less, for example, 1500 or less. This allows for a high level of both adsorption for HCs and durability performance.

Zeolite may contain at least one of transition metal elements such as manganese (Mn), iron (Fe), cobalt (Co), nickel (Ni), copper (Cu), and silver (Ag); alkaline earth elements such as calcium (Ca), barium (Ba), and strontium (Sr); alkali metal elements such as sodium (Na) and potassium (K); and noble metal elements such as platinum group metals (PGMs). This allows for enhancement of retention performance for HCs and an increase in desorption temperature.

The first hydrocarbon adsorption layer 22 and the second hydrocarbon adsorption layer 32 may each further contain an optional component besides zeolite. Examples of the optional component include catalyst metals such as those shown as examples of those contained in the catalyst metal portion 40, for example, platinum group metals such as Rh, Pd, and Pt. Other examples of the optional component include inorganic oxides such as those shown as examples of those contained in the catalyst metal portion 40, for example, Al-containing oxides such as alumina and alumina-containing oxides. This allows the excellent adsorption performance to be maintained for a long period of time even when the hydrocarbon adsorption device 10 is exposed to high temperatures by exhaust gas.

Although not particularly limited thereto, the contents (solid contents) of the zeolite contained in the first hydrocarbon adsorption layer 22 and the second hydrocarbon adsorption layer 32 are each approximately 50 g/L to 300 g/L, typically 90 g/L to 200 g/L, for example, 100 g/L to 150 g/L per 1 L of the base material 21, 31. The adsorption amount of HCs is proportional to the amount of zeolite. Thus, the content of zeolite of the predetermined value or higher allows a sufficient adsorption amount to be ensured and the adsorption performance to be improved. The content of the zeolite of the predetermined value or less allows for reduction in heat capacity of the hydrocarbon adsorption device 10 and enhancement of the temperature increasing action. This also improves peel resistance and durability of the first hydrocarbon adsorption layer 22 and the second hydrocarbon adsorption layer 32.

The first hydrocarbon adsorption section 20 and the second hydrocarbon adsorption section 30 can be produced by the following method. For example, for the first hydrocarbon adsorption section 20, first, a base material 21 and slurry for forming the first hydrocarbon adsorption layer 22 are provided. The slurry contains zeolite as an essential raw material component, and may be prepared by dispersing the zeolite and other optional components such as a binder and various additives in a dispersion medium. As the binder, alumina sol or silica sol may be used, for example. As the dispersion medium, water or an aqueous solvent may be used, for example. This slurry flows into the base material 21 by a known method, such as impregnation or wash-coatng, and the base material 21 is then baked at a predetermined temperature for a predetermined time, thereby forming a first hydrocarbon adsorption layer 22. The second hydrocarbon adsorption section 30 can also be formed in a similar manner.

As described above, in the technology disclosed herein, focusing on the molecular size of HCs, the first hydrocarbon adsorption section 20 containing the zeolite having a relatively small pore diameter is arranged on the upstream side, and the second hydrocarbon adsorption section 30 containing the zeolite having a relatively large pore diameter is arranged on the downstream side of the second hydrocarbon adsorption section 30. Then, the first hydrocarbon adsorption layer 22 arranged on the upstream side selectively adsorbs HC species having a relatively small molecular size, and the second hydrocarbon adsorption layer 32 selectively adsorbs HC species having a relatively large molecular size. As described above, HC species are sorted by molecular size using pores specific to zeolite, and HC species having smaller molecular size is selectively adsorbed on the first hydrocarbon adsorption section 20.The second hydrocarbon adsorption section 30 can also be HCs in a similar manner. This allows for higher adsorption temperature of HCs particularly in the second hydrocarbon adsorption section 30. This reduces emissions of HCs when the internal combustion engine is in a cold state, for example.

### «Application of Hydrocarbon Adsorption Device»

The hydrocarbon adsorption device 10 can be used to adsorb HCs contained in various fluids (e.g., gases, liquids, and multiphase fluids). For example, the hydrocarbon adsorption device 10 can be suitably used to purify exhaust gas exhausted from internal combustion engines of vehicles such as cars and trucks, motorcycles and motorized bicycles, marine products such as ships, tankers, water bikes, personal watercraft, outboard motors, gardening products such as mowers, chainsaws, and trimmers, leisure products such as gold carts and four wheel buggies, power generation facilities such as cogeneration systems, and waste incinerators. Among them, the hydrocarbon adsorption device 10 can be suitably used in vehicles such as cars.

Some test examples regarding the present invention will be described below. However, it is not intended that the present invention is limited to such test examples.

### [Test Example 1]

### (Example 1)

First, two cylindrical honeycomb base materials (Φ 30 mm × 25 mm, the number of cells: 300 cpsi (cells per square inch), made of cordierite) were provided.

Then, a first hydrocarbon adsorption layer was formed on one of the honeycomb base materials, thereby producing a first adsorption catalyst body. Specifically, first, a zeolite (H-CHA, the silica-alumina ratio: 13) powder having a framework type of CHA and aluminum sol as an inorganic binder were mixed to have a solid mass ratio of 12 : 1. Pure water was added to the resultant mixture so that the mixture contained 35 mass% of the zeolite, which was then stirred. The mixture was then pulverized and graded in a ball mill. Then, the viscosity was adjusted with a thickener to prepare a slurry. The slurry was wash-coated so that the content of the zeolite was 135 g/L per volume (1 L) of the honeycomb base material. This was then heat-dried in a dryer to remove moisture, and then based at 500°C for 1 hour. Accordingly, a first adsorption catalyst body in which the first hydrocarbon adsorption layer made of zeolite of CHA was formed on the base material was produced.

Next, a second hydrocarbon adsorption layer was formed on another honeycomb base material, thereby producing a second adsorption catalyst body. Specifically, a second adsorption catalyst body in which a second hydrocarbon adsorption layer made of zeolite of MFI was formed on a base material was produced in the same manner as the first hydrocarbon adsorption layer described above except that a powder of zeolite (the silica-alumina ratio: 1500) having a framework type of MFI and an inorganic binder were mixed to have a solid mass ratio of 10 : 1, and the content of the zeolite per volume (1 L) of the honeycomb base material was 116 g/L.

The first adsorption catalyst body was arranged on the downstream side and the second adsorption catalyst body was arranged on the downstream side in tandem, thereby producing an adsorption device.

### (Example 2)

A first adsorption catalyst body of Example 2 was produced in the same manner as in Example 1 except that the zeolite of CHA (Cu-CHA, Cu-carrying amount: 3.6 mass%) ion-exchanged with Cu was used. A second adsorption catalyst body was provided as in Example 1, and an adsorption device was produced.

### (Example 3)

A first adsorption catalyst body of Example 3 was produced in the same manner as in Example 1 except that a powder of zeolite (the silica-alumina ratio: 18) having a framework type of FER and an inorganic binder were mixed to have a solid mass ratio of 10 : 1, and the content of the zeolite per volume (1 L) of the honeycomb base material was 116 g/L. A second adsorption catalyst body was provided as in Example 1, and an adsorption device was produced.

### (Comparative Example 1)

An adsorption device of Comparative Example 1 was produced by switching the arrangement of the adsorption catalyst bodies of Example 1, i.e., arranging the second adsorption catalyst body on the upstream side and arranging the first adsorption catalyst body on the downstream side in tandem.

### (Comparative Example 2)

In Comparative Example 2, two second adsorption catalyst bodies of Example 1 were prepared. The adsorption catalyst bodies are arranged in tandem to produce an adsorption device.

### [Adsorption-Desorption Evaluation for HCs]

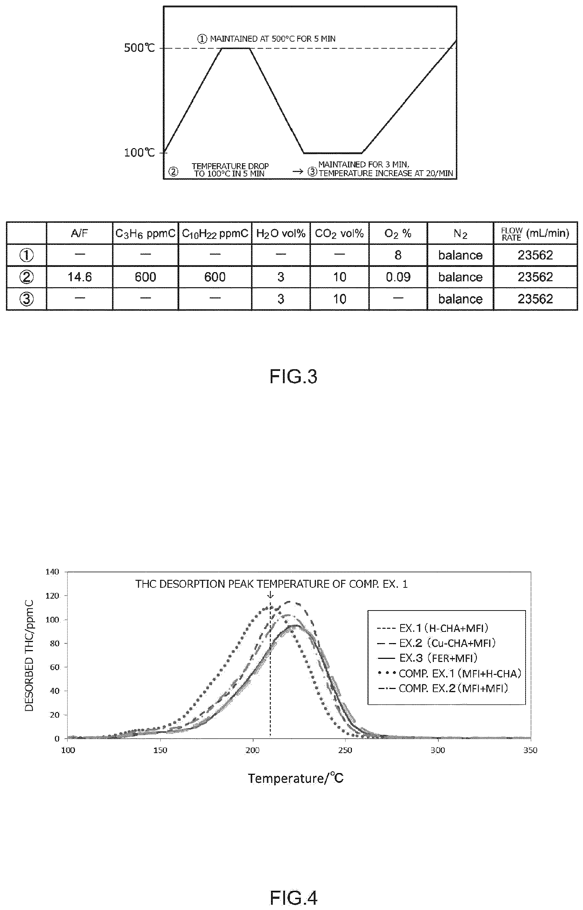

The adsorption devices of Examples were installed in an evaluation device to evaluate desorption temperatures of HCs. Specifically, the adsorption device was first pretreated by baking at 500°C for 5 minutes to remove HCs remaining in the pores. Next, as shown in the temperature increase pattern in Fig. 3, the temperature of the adsorption device was lowered to 100°C. Thereafter, mixed HCs (decane (C₁₀H₂₂): 600 ppmC, propylene (C₃H₆): 600 ppmC) was circulated in the adsorption device for 5 minutes, and held for 3 minutes. The temperature of the adsorption device was then increased to 500°C at a temperature increase rate of 20 °C/min, and the desorption temperatures of the HCs adsorbed on the adsorption device were evaluated. The relationship between desorbed HCs (desorbed THC; Total HC) and the temperature is shown in Fig. 4. The THC desorption peak temperature for each example is shown in Table 2.

**[Table 2]**

| | Upstream zeolite | | | Downstream zeolite | | | P2-P1 (Å) | THC desorption peak temperature (°C) | ΔT (°C) based on Comp. Ex. 1 | C₃H₆ adsorption amount (mg/gz) | C₁₀H₂₂ adsorption amount (mg/gz) |
|---|---|---|---|---|---|---|---|---|---|---|---|
| | Framework type | Pore diameter P1 (Å) | Silica-alumina ratio | Framework type | Pore diameter2 (Å) | Silica-alumina ratio | | | | | |
| Ex. 1 | H-CHA | 3.8 | 13 | MFI | 5.6 | 1500 | 1.8 | 223 | 14 | 0.99 | 17.71 |
| Ex. 2 | Cu-CHA | 3.8 | 13 | MFI | 5.6 | 1500 | 1.8 | 221 | 12 | 1.42 | 20.56 |
| Ex. 3 | FER | 5.4 | 18 | MFI | 5.6 | 1500 | 0.2 | 222 | 13 | 1.75 | 17.74 |
| Comp. Ex. 1 | MFI | 5.6 | 1500 | H-CHA | 3.8 | 23 | -1.8 | 209 | - | 1.51 | 21.2 |
| Comp. Ex. 2 | MFI | 5.6 | 1500 | MFI | 5.6 | 1500 | 0 | 219 | 10 | 0.90 | 19.19 |

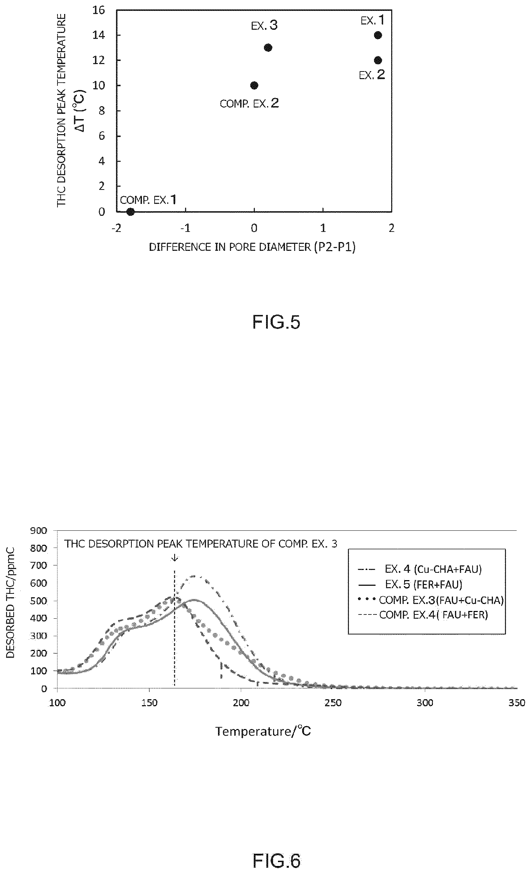

Fig. 5 is a graph illustrating a relationship between the THC desorption peak temperature ΔT (relative to Comparative Example 1) and a difference (P2 - P1) in pore diameter. As shown in Table 2 and Fig. 5, the pore diameter P1 of the zeolite contained in the adsorption catalyst body on the upstream side is smaller than the pore diameter P2 of the zeolite contained in the adsorption catalyst body on the downstream side. In other words, in Examples 1 to 3 where 0 < (P2 - P1), the THC desorption peak temperatures were all shifted to the higher temperature side compared to Comparative Example 1 where (P2 - P1) < 0 and Comparative Example 2 where (P2 - P1) = 0. This is believed to be due to the selective adsorption of HC species with small molecular size on the upstream adsorption catalyst body, thereby reducing competitive adsorption of HC species and increasing the desorption temperature of HCs on the downstream adsorption catalyst. As can be seen from above, it was found that the desorption temperature of HCs can be increased by setting P1 < P2. From the comparison of Examples 1 and 2, it was found that the zeolite on the upstream adsorption catalyst body is preferably the H-CHA, which has not been ion-exchanged.

### [Test Example 2]

### (Example 4)

A second adsorption catalyst body of Example 4 was produced in the same manner as in Example 1 except that a powder of zeolite (the silica-alumina ratio: 500) having a framework type of FAU and an inorganic binder were mixed to have a solid mass ratio of 10 : 2, and the content of the zeolite per volume (1 L) of the honeycomb base material was 116 g/L. A first adsorption catalyst body was provided as in Example 2, and an adsorption device was produced.

### (Example 5)

An adsorption device of Example 5 was produced in the same manner as in Example 4 except that the first adsorption catalyst body as in Example 3 was prepared.

### (Comparative Example 3)

An adsorption device of Comparative Example 3 was produced by switching the arrangement of the adsorption catalyst bodies of Example 4, i.e., arranging the second adsorption catalyst body on the upstream side and arranging the first adsorption catalyst body on the downstream side in tandem.

### (Comparative Example 4)

An adsorption device of Comparative Example 4 was produced by switching the arrangement of the adsorption catalyst bodies of Example 5, i.e., arranging the second adsorption catalyst body on the upstream side and arranging the first adsorption catalyst body on the downstream side in tandem.

The desorption temperature for HCs was then evaluated as in Test Example 1. The relationship between desorbed Hcs (desorbed THC; Total HC) and the temperature is shown in Fig. 6. The THC desorption peak temperature for each example is shown in Table 3.

**[Table 3]**

| | Upstream zeolite | | | Downstream zeolite | | | P2-P1 (Å) | THC desorption peak temperature (°C) | ΔT (°C) based on Comp. Ex. 3 | C₃H₆ adsorption amount (mg/gz) | C₁₀H₂₂ adsorption amount (mg/gz) |
|---|---|---|---|---|---|---|---|---|---|---|---|
| | Framework type | Pore diameter P1 (Å) | Silica-alumina ratio | Framework type | Pore diameter P2 (Å) | Silica-alumina ratio | | | | | |
| Ex. 4 | Cu-CHA | 3.8 | 13 | FAU | 7.4 | 500 | 3.6 | 176 | 15 | 1.38 | 14.76 |
| Ex. 5 | FER | 5.4 | 18 | FAU | 7.4 | 500 | 2.0 | 181 | 20 | 1.76 | 12.78 |
| Comp. Ex. 3 | FAU | 7.4 | 500 | Cu-CHA | 3.8 | 13 | -3.6 | 161 | - | 1.54 | 13.06 |
| Comp. Ex. 4 | FAU | 7.4 | 500 | FER | 5.4 | 18 | -2.0 | 169 | 8 | 2.07 | 11.19 |

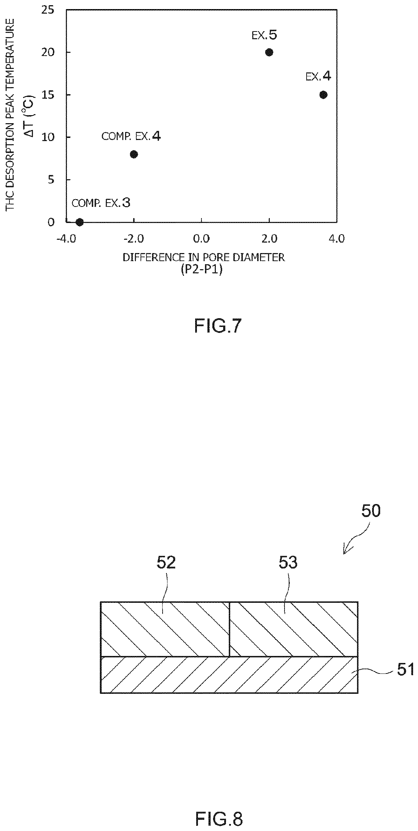

Fig. 7 is a graph illustrating a relationship between the THC desorption peak temperature ΔT (relative to Comparative Example 3) and a difference (P2 - P1) in pore diameter. As shown in Table 3 and Fig. 7, as in Test Example 1, the THC desorption peak temperatures in Examples 4 and 5 where 0 < (P2 - P1) were all shifted to the higher temperature side, compared to Comparative Examples 3 and 4 where (P2 - P1) < 0.

While some embodiments of the disclosure have been described above, the embodiments are mere examples. The disclosure can be executed in various other embodiments. The disclosure can be executed based on the contents disclosed herein and the technical knowledge in the present field. The technology described is the appended claims include various modifications and changes of the foregoing embodiments. For example, it is possible to replace partially the embodiments with other aspects, and it is also possible to add other variations to the embodiments. If the technical feature is not described as essential, it can be eliminated, as appropriate.

For example, in the hydrocarbon adsorption device 10, the first hydrocarbon adsorption layer 22 of the first hydrocarbon adsorption section 20 and the second hydrocarbon adsorption layer 32 of the second hydrocarbon adsorption section 30 are each made of zeolite. However, the present disclosure is not limited thereto. The first hydrocarbon adsorption layer 22 and/or the second hydrocarbon adsorption layer 32 may further contain a catalyst metal such as shown as examples to be contained in the catalyst metal portion 40 besides zeolite. For example, the first hydrocarbon adsorption layer 22 may further contain Pd and/or Rh, and the second hydrocarbon adsorption layer 32 may further contain Pt and/or Rh. In this case, the exhaust gas purification device 3 may not include the catalyst metal portion 40.

For example, in the hydrocarbon adsorption device 10, the first hydrocarbon adsorption layer 22 and the second hydrocarbon adsorption layer 32 were separately carried on the base materials 21, 32, respectively, and the first hydrocarbon adsorption section 20 and the second hydrocarbon adsorption section 30 are separate from each other. However, the present disclosure is not limited thereto. Fig. 8 is a partially enlarged partial sectional view illustrating a portion of a partition of a hydrocarbon adsorption device 50 according to another embodiment. As shown in Fig. 8, the hydrocarbon adsorption device 50 may have one base material 51 divided into upstream and downstream sections, and the first hydrocarbon adsorption layer 52 and the second hydrocarbon adsorption layer 53 may be formed in the upstream and downstream sections, respectively.

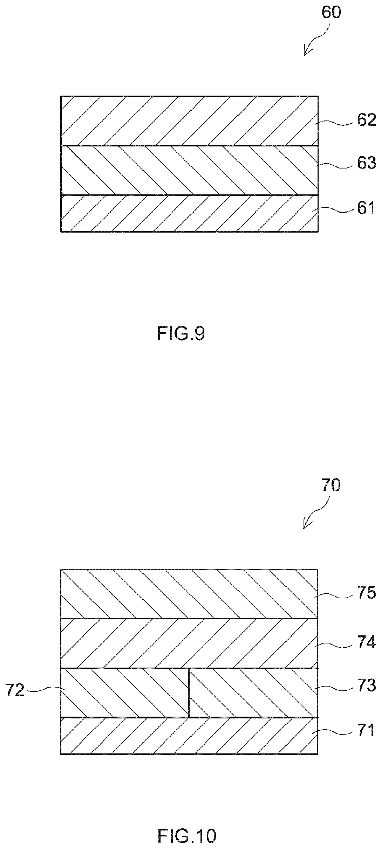

Fig. 9 is a partially enlarged partial sectional view illustrating a portion of a partition of a hydrocarbon adsorption device 60 according to another embodiment. as shown in Fig. 9, the hydrocarbon adsorption device 60 may include a base material 61, a second hydrocarbon adsorption layer 63 provided on the relatively lower layer side and containing zeolite having a pore diameter P2, and a first hydrocarbon adsorption layer 62 provided on the relatively higher layer side and containing zeolite having a pore diameter P1 (provided that P1 < P2).

For example, in the hydrocarbon adsorption device 10, the first hydrocarbon adsorption section 20 includes only a first hydrocarbon adsorption layer 22 on a base material 21, and the second hydrocarbon adsorption section 30 includes only a second hydrocarbon adsorption layer 32 on a base material 31. However, the present disclosure is not limited thereto. The first hydrocarbon adsorption section 20 and/or the second hydrocarbon adsorption section 30 may further include one or more additional layers in addition to the first hydrocarbon adsorption layer 22 and the second hydrocarbon adsorption layer 32.

As a first modification, the first hydrocarbon adsorption section 20 and the second hydrocarbon adsorption section 30 may each further include an upper layer including a porous inorganic oxide as an adsorbent for adsorbing, for example, substances other than HCs, on the first hydrocarbon adsorption layer 22 and the second hydrocarbon adsorption layer 32. Inorganic oxides include, for example, Al-containing oxides such as alumina and alumina-containing oxides described as examples of substances contained in the catalyst metal portion 40.

As a second modification, as shown in Fig. 10 with respect to Test Example 3 to be described later, one or more layered catalyst metal portions (catalyst layers) 74, 75 may be formed on each of the upstream HC adsorption layer 72 and the downstream HC adsorption layer 73 in the first hydrocarbon adsorption section (upstream HC adsorption layer) 72 and the second hydrocarbon adsorption section (downstream HC adsorption layer) 73.

A catalyst metal portion (catalyst layer) containing Pd and/or Rh may be placed on the first hydrocarbon adsorption section (upstream HC adsorption layer) 72, and a catalyst metal portion (catalyst layer) containing Rh may be placed on the second hydrocarbon adsorption section (downstream HC adsorption layer) 73. A first catalyst metal layer containing an oxidation catalyst (e.g., at least one of Pd or Pt) and a second catalyst metal layer containing a reduction catalyst (e.g., Rh) may be placed on the first hydrocarbon adsorption section (upstream HC adsorption layer) 72 and/or the second hydrocarbon adsorption section (downstream HC adsorption layer) 73.

As a third modification, the first hydrocarbon adsorption section 20 and the second hydrocarbon adsorption section 30 may each further include an OSC material, on the first hydrocarbon adsorption layer 22 and the second hydrocarbon adsorption layer 32. Examples of the OSC material include Ce-containing oxides such as ceria and CZ composite oxide such as shown as examples of the substance contained in the catalyst metal portion 40.

### [Test Example 3]

Next, as a Test Example 3, an exhaust gas purification catalyst with HC adsorption sections was produced, and was then subjected to an HC purifying performance evaluation test using a gasoline engine bench.

### (Example 11)

Specifically, first, a cylindrical cordierite honeycomb base material (400 mesh, which is the number of cells per square inch) having a diameter of about 106 mm, a length of about 75 mm, and a volumetric capacity of about 0.7 L was provided.

Then, appropriate amounts of zeolite (Cu-CHA, the Cu-carrying amount: 3.6 mass%) powder of a framework type of CHA which has been ion-exchanged with Cu, used in Example 1, a silica sol as a binder, and ion-exchange water were mixed, thereby preparing a first slurry.

At the same time, appropriate amounts of zeolite (silica-alumina ratio: 1500) powder of a framework type of MFI, used in Example 2, an aluminum sol as a binder, and ion-exchange water were mixed, thereby preparing a second slurry.

Then, the first slurry was poured from the front side of the honeycomb base material, and the second slurry was poured from the rear side of the honeycomb base material. Accordingly, a first HC adsorption layer (upstream HC adsorption layer) made of the first slurry was coated on the wall surface in the range of 50% upstream of the entire length of the honeycomb base material in the exhaust gas flowing direction. Further, a second HC adsorption layer (downstream HC adsorption layer) made of the second slurry was coated on the wall surface in the range of 50% downstream of the entire length of the honeycomb base material in the exhaust gas flowing direction.

Then, excess slurry was removed, and a resultant was dried at 250°C for 2 hours, and then baked at 500°C for 2 hours. Thus, as shown in Fig. 10, the upstream HC adsorption layer 72 and the downstream HC adsorption layer 73 were formed on the surface of the base material 71.

In this test example, the amount of the zeolite (Cu-CHA) contained in the upstream HC adsorption layer 72 and the amount of the zeolite contained in the downstream HC adsorption layer 73 were adjusted to be 58 g (58 g/L-cat) per 1 L of the catalyst body.

Next, appropriate amounts of alumina powder, cerium-zirconium composite (CZ) powder, barium sulfate, and a diamminedinitritoplatinum solution, and ion-exchange water were mixed, thereby producing Pt-containing slurry.

The Pt-containing slurry was poured into the base material 71 on which the upstream HC adsorption layer 72 and the downstream HC adsorption layer 73 were formed, to coat the entire length of the base material 71.

Then, excess slurry was removed, and the resultant was dried at 250°C for 2 hours, and then baked at 500°C for 2 hours. Thus, as shown in Fig. 10, the lower catalyst layer (Pt layer) 74 containing platinum as an oxidation catalyst metal was formed on the upstream HC adsorption layer 72 and the downstream HC adsorption layer 73.

In this example, the contents of the components contained in the lower catalyst layer (Pt layer) 74 were adjusted to be as follows:
Pt: 3 g/L-cat;
Alumina: 26 L-cat;
CCZ: 26 g/L-cat; and
Barium sulfate: 8 g/L-cat.

Next, appropriate amounts of alumina powder, cerium-zirconium composite (CZ) powder, a rhodium nitrate solution, and ion-exchange water were mixed, thereby producing a Rh-containing slurry.

The Rh-containing slurry was poured into the base material 71 on which the upstream HC adsorption layer 72 and the downstream HC adsorption layer 73 on each of which the lower catalyst layer (Pt layer) 74 was formed were formed, to coat the entire length of the base material 71.

Then, excess slurry was removed, and a resultant was dried at 250°C for 2 hours, and then baked at 500°C for 2 hours. Thus, as shown in Fig. 10, a lower catalyst layer (Rh layer) 75 containing rhodium was formed as a reduction catalyst metal on the lower catalyst layer (Pt layer) 74.

In this example, the contents of the components contained in the upper catalyst layer (Rh layer) 75 were adjusted to be as follows:
Rh: 0.4 g/L-cat;
Alumina: 34 g/L-cat; and
CZ: 51 g/L-cat.

By the above series of processes, the exhaust gas purification catalyst body 70 with HC adsorption sections of Example 11 was produced.

### (Comparative Example 11)

As Comparative Example 11 corresponding to Example 11, an exhaust gas purification catalyst body with HC adsorption sections of Comparative Example 11 was produced by the same processes using the same materials as in Example 11 except that the first slurry (zeolite species = Cu-CHA) was used to form a downstream HC adsorption layer, and the second slurry (zeolite species = MFI) was used to form an upstream HC adsorption layer. In other words, as shown in Table 4 below, in Example 11 and Comparative Example 11, the zeolite species forming the upstream HC adsorption layer and the zeolite species forming the downstream HC adsorption layer are opposite.

**[Table 4]**

| | HC adsorption layer | Lower catalyst layer | Upper catalyst layer | HC purification rate (%) |
|---|---|---|---|---|
| Ex. 11 | Upstream side 50% Cu-CHA | Pt layer | Rh layer | 80.5 |
| | Downstream side 50% MFI | | | |
| Comp. Ex. 11 | Upstream side 50% MFI | Pt layer | Rh layer | 79.2 |
| | Downstream side 50% Cu-CHA | | | |

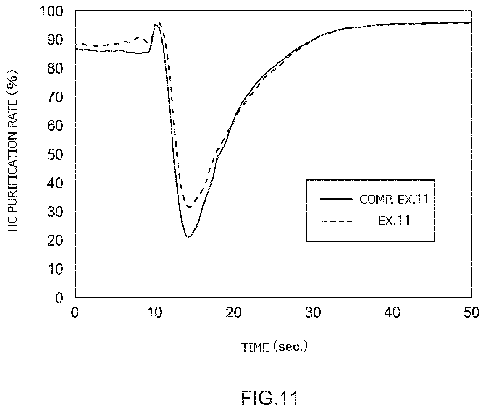

Each of the exhaust gas purification catalyst bodies with HC adsorption sections of Example 11 and Comparative Example 11 was installed in an exhaust path of an engine bench including a commonly used in-line 4-cylinder gasoline engine, the "filling gas temperature" to be introduced into the exhaust gas purification catalyst bodies with HC adsorption sections via a heat exchanger was adjusted to 500°C, and exhaust gas from the gasoline engine was introduced for 50 seconds. The HC purification rate of this test example was calculated from the integrated value of the total HC concentration in the filling gas introduced into the exhaust gas purification catalyst body with the HC adsorption sections and the total HC concentration in the exhausting gas exhausted from the exhaust gas purification catalyst body with the HC adsorption sections, from the start of the introduction to 50 seconds. The results are shown in the corresponding columns of Table 4 above, and Fig. 11 shows the changes in HC purification rate (%) from the state of introduction of the exhaust gas to 50 seconds in this test example. In this test example, the exhaust gas purification catalyst body applied has HC adsorption sections (the upstream HC adsorption layer and the downstream HC adsorption layer). Thus, as shown in Fig. 11, adsorption-purification of the HC component in the exhaust gas occur in the transient region.

As can be seen from Table 4, the HC purification rate of the exhaust gas purification catalyst body with HC adsorption sections of Example 11 was better than that of the exhaust gas purification catalyst body with HC adsorption sections of Comparative Example 11. As described above, since the configurations of the lower catalyst layer (Pt layer) 74 and the upper catalyst layer (Rh layer) 75 formed on the HC adsorption sections (the upstream HC adsorption layer 72 and the downstream HC adsorption layer 73) are the same, the difference in HC purification rate between Example 11 and Comparative Example 11 indicates that the catalyst of Example 11, in which the zeolite in the upstream HC adsorption layer is Cu-CHA, has a higher HC desorption temperature and is better able to retain HCs until the catalyst is sufficiently warmed up.

## Claims

1. A hydrocarbon adsorption device configured to circulate a fluid and adsorb hydrocarbons, the hydrocarbon adsorption device comprising:
a first hydrocarbon adsorption section containing zeolite; and
a second hydrocarbon adsorption section provided downstream of the first hydrocarbon adsorption section in a fluid flowing direction in which the fluid flows and containing zeolite, wherein
a pore diameter P1 of the zeolite contained in the first hydrocarbon adsorption section is smaller than a pore diameter P2 of the zeolite contained in the second hydrocarbon adsorption section.

2. The hydrocarbon adsorption device according to claim 1, wherein
a difference (P2 - P1) between the pore diameter P1 and the pore diameter P2 is between 0.1 Å to 4 Å inclusive.

3. The hydrocarbon adsorption device according to claim 1 or 2, wherein
the pore diameter P1 is between 3.5 Å to 5.5 Å inclusive.

4. The hydrocarbon adsorption device according to claim 1 or 2, wherein
the pore diameter P2 is between 5 Å to 8 Å inclusive.

5. The hydrocarbon adsorption device according to any one of claims 1 to 4,
a silica-alumina ratio of the zeolite contained in the first hydrocarbon adsorption section is smaller than a silica-alumina ratio of the zeolite contained in the second hydrocarbon adsorption section.

6. The hydrocarbon adsorption device according to any one of claims 1 to 5, wherein
a silica-alumina ratio of the zeolite contained in the first hydrocarbon adsorption section is between 10 to 30 inclusive.

7. The hydrocarbon adsorption device according to any one of claims 1 to 6, wherein
the zeolite contained in the first hydrocarbon adsorption section includes at least one framework type of CHA or FER.

8. The hydrocarbon adsorption device according to any one of claims 1 to 7, wherein
the zeolite contained in the second hydrocarbon adsorption section includes at least one framework type of MFI or FAU.

9. The hydrocarbon adsorption device according to any one of claims 1 to 8, wherein
the fluid is a gas.

10. The hydrocarbon adsorption device according to any one of claims 1 to 9, wherein
the fluid is exhaust gas.

11. An exhaust gas purification system disposed in an exhaust path of an internal combustion engine and configured to purify hydrocarbons in exhaust gas exhausted from the internal combustion engine, the exhaust gas purification system comprising:
the hydrocarbon adsorption device according to any one of claims 1 to 10; and
a catalyst metal portion containing a catalyst metal.
